# EUROPÄISCHE PATENTSCHRIFT

(11) **EP 4 177 137 B1**
(45) Veröffentlichungstag und Bekanntmachung des Hinweises auf die Patenterteilung: **10.12.2025**
(21) Anmeldenummer: 22201418.5
(22) Anmeldetag: 13.10.2022
(51) Int. Cl.: B62D 15/02

(54) **VERFAHREN ZUM UNTERSTÜTZEN EINES EINPARKVORGANGS, PARKASSISTENZSYSTEM UND COMPUTERPROGRAMM**
METHOD FOR SUPPORTING A PARKING PROCEDURE, PARKING ASSISTANCE SYSTEM AND COMPUTER PROGRAM
PROCÉDÉ D'ASSISTANCE D'UN PROCESSUS DE STATIONNEMENT, SYSTÈME D'ASSISTANCE AU STATIONNEMENT ET PROGRAMME INFORMATIQUE

(30) Priorität: 02.11.2021 DE 102021128430; 12.09.2022 DE 102022123125
(43) Veröffentlichungstag der Anmeldung: 10.05.2023
(73) Patentinhaber: Ford Global Technologies, LLC, Dearborn, MI 48126 (US)
(72) Erfinder: Röber, Marc, 40223 Düsseldorf (DE); Wittrock, Tobias, 50354 Hürth (DE)
(74) Vertreter: Markowitz, Markus

(56) Entgegenhaltungen:
- DE-A1- 102011 086 245
- DE-A1- 102014 220 298
- DE-A1- 102018 201 447
- DE-A1- 102019 216 363
- US-A1- 2019 101 925

## Beschreibung

Die Erfindung betrifft ein computerimplementiertes Verfahren zum Unterstützen eines Einparkvorgangs eines Fahrzeugs von einer Ausgangsposition in eine Parkposition in einer Querparklücke, ein Parkassistenzsystem sowie ein Computerprogramm.

Aus dem Stand der Technik sind verschiedene Parkassistenzsysteme bekannt, mit denen ein Einparkvorgang unterstützt werden kann. Beispielsweise können Hinweise oder Anweisungen, z. B. bezüglich des Lenkverhaltens, an den Fahrer ausgegeben werden. Daneben kann der Einparkvorgang teilweise oder vollständig automatisch durchgeführt werden, indem die Querführung und eventuell zusätzlich auch die Längsführung des Fahrzeuges beeinflusst oder sogar übernommen werden. Bei automatischer Querführung übernimmt das Parkassistenzsystem die Lenkung des Fahrzeugs. Die Längsführung betrifft hingegen das Beschleunigen und Bremsen des Fahrzeugs sowie einen etwaigen Richtungswechsel zwischen Vorwärtsfahrtrichtung und Rückwärtsfahrtrichtung, die je nach Automatisierungsgrad ebenfalls teilweise oder vollständig vom Parkassistenzsystem übernommen werden können.

Parkassistenzsysteme können den Einparkvorgang in Längsparklücken und/oder Querparklücken unterstützen bzw. durchführen, wobei Längsparklücken im Wesentlichen parallel zur Fahrtrichtung des Hauptverkehrs bzw. zur Fahrbahn und Querparklücken im Wesentlichen senkrecht zur Fahrtrichtung des Hauptverkehrs bzw. zur Fahrbahn ausgerichtet sind.

Insbesondere ein Einparken in Querparklücken stellt häufig eine Gefahrensituation dar, da hierbei oftmals Korrekturzüge erforderlich sind, um die gewünschte Parkposition zu erreichen. Solche Korrekturzüge erfordern oftmals das erneute Befahren der Fahrbahn, nachdem das Fahrzeug zuvor bereits in die Querparklücke eingetaucht war. Dies kann dazu führen, dass der nachfolgende Verkehr bereits wieder beschleunigt und den Korrekturzug behindert. In der Folge kann es zu einer Kollision zwischen dem nachfolgenden Verkehr und dem den Korrekturzug ausführenden einparkenden Fahrzeug kommen.

Um Unfälle zu vermeiden ist beispielsweise aus der DE 10 2014 220 298 A1 ein Verfahren zur Unfallvermeidung mit dem nachfolgenden Verkehr bei einem automatisierten Einparkvorgang eines Kraftfahrzeugs mit einem Parkassistenzsystem mit zumindest automatischer Querführung bekannt. Wird festgestellt, dass ein Korrekturzug erforderlich ist, um die Parkposition zu erreichen, wird verhindert, dass das Fahrzeug bei dem Einparkzug so tief in die Querparklücke eintaucht, dass danach der Fahrer mit Beginn des Korrekturzugs in Vorwärts- bzw. Rückwärtsrichtung aufgrund der Sichtversperrung durch ein die Querparklücke begrenzendes Fahrzeug keine freie Sicht mehr auf den nachfolgenden Verkehr hätte.

Um ein zu tiefes Eintauchen des Fahrzeugs in die Querparklücke zu ermitteln, wird eine Sichtlinie definiert, die typischerweise durch die dem Verkehrsraum zugewandte Heck- oder Frontseite eines oder mehrerer die Querparklücke begrenzender Fahrzeuge gebildet wird. Weiterhin wird ein Referenzpunkt definiert, beispielsweise auf der Verbindungslinie zwischen den beiden B-Säulen des Fahrzeugs. Sodann wird geprüft, ob dieser Referenzpunkt die Sichtlinie, gegebenenfalls mit einem bestimmten Versatz, erreicht bzw. überschreitet.

Die Festlegung der Sichtlinie erfordert eine entsprechende Überwachung des Fahrzeugumfelds und Lokalisierung der die Querparklücke begrenzenden Fahrzeuge mittels entsprechender Umfeldsensorik, da die Sichtlinie in Abhängigkeit der Position der die Querparklücke begrenzenden Fahrzeuge festgelegt wird. Zudem kann es zu Situationen kommen, in denen die Sichtlinie nicht oder nicht zuverlässig festgelegt werden kann, z. B. da die Querparklücke nur einseitig von einem Fahrzeug begrenzt wird oder in Fällen eines nicht geradlinigen Straßenverlaufs, wodurch die Heck- bzw. Frontseiten der die Querparklücke begrenzenden Fahrzeuge nicht parallel zueinander angeordnet sind. Diese Situationen können zudem zu einer komplexen und rechentechnisch aufwändigen Ermittlung der Sichtlinie führen.

Durch das in der DE 10 2014 220 298 A1 beschriebene Verfahren kann zwar verhindert werden, dass die Sicht des Fahrers des einparkenden Fahrzeugs durch benachbart parkende Fahrzeuge versperrt wird, so dass der Fahrer den nachfolgenden Verkehr bei der Durchführung des Korrekturzugs ausreichend beachten kann. Eine weitere Gefahrenquelle stellt jedoch unabhängig von der Frage einer Sichtverbindung zwischen dem Fahrer und dem nachfolgenden Verkehr der nachfolgende Verkehr als solcher dar. Es kann nämlich eine Situation auftreten, in der der nachfolgende Verkehr bereits wieder beschleunigt oder gar nicht erst anhält, obwohl der Einparkvorgang noch nicht beendet und die Parkposition noch nicht erreicht ist, d. h. ein Korrekturzug durchzuführen ist, beispielsweise falls das einparkende Fahrzeug bereits zu weit in die Querparklücke eingetaucht ist und ein Korrekturzug nicht mehr erwartet wird und/oder ein Umfahren des in die Querparklücke eingetauchten Fahrzeugs ohne Behinderung des Gegenverkehrs bereits wieder möglich ist. Dies kann möglicherweise zu einer Kollision des einparkenden Fahrzeugs mit dem nachfolgenden Verkehr bei Durchführung des Korrekturzugs führen.

Durch das in der DE 10 2014 220 298 A1 vorgeschlagene Verfahren kann zwar gegebenenfalls ebenfalls erreicht werden, dass das einparkende Fahrzeug für den nachfolgenden Verkehr während des Einparkvorgangs bis kurz vor Erreichen der Parkendposition sichtbar bleibt. Das Ausmaß dieses Effekts ist jedoch stark von der Festlegung des Referenzpunkts bezüglich dem der Querparklücke abgewandten Ende des einparkenden Fahrzeugs abhängig und kann daher nicht zuverlässig erzielt werden. Je nach Ausführung des einparkenden Fahrzeugs beispielsweise in Abhängigkeit der Länge der vorderen Haube, z. B. Lieferwagen mit kurzer Haube, Sportwagen mit langer Haube, oder der konkreten Ausführung des Fahrzeughecks, und in Abhängigkeit davon, ob es sich um einen Vorwärts- oder Rückwärtseinparkvorgang handelt, bleibt ein mehr oder weniger großer Teil des einparkenden Fahrzeugs für den nachfolgenden Verkehr sichtbar und es wird ein mehr oder weniger großer Abschnitt der Fahrbahn vom einparkenden Fahrzeug blockiert. Mit anderen Worten bedeutet das bloße Bestehen einer Sichtverbindung noch nicht, dass der Verkehrsraum für den nachfolgenden Verkehr blockiert wird, insbesondere dann nicht, wenn der Fahrer des einparkenden Fahrzeugs sehr weit vorn (beim Vorwärtseinparken) bzw. sehr weiten hinten (beim Rückwärtseinparken) im Fahrzeug sitzt. Die in der DE 10 2014 220 298 A1 vorgeschlagene Festlegung von Sichtlinie und Referenzpunkt ist daher nicht geeignet, während des Einparkvorgangs zuverlässig zu verhindern, dass der nachfolgende Verkehr bereits wieder beschleunigt oder gar nicht erst anhält, obwohl der Einparkvorgang noch nicht beendet und die Parkposition noch nicht erreicht ist.

Vor diesem Hintergrund ist es Aufgabe der Erfindung, ein Verfahren, ein Parkassistenzsystem sowie ein Computerprogramm anzugeben, mit denen die vorstehend beschriebenen Nachteile vermieden und die Verkehrssicherheit erhöht werden können.

Gelöst wird diese Aufgabe durch die Gegenstände der unabhängigen Ansprüche. Die abhängigen Ansprüche betreffen Ausgestaltungen dieser erfindungsgemäßen Lösungen.

Eine Grundidee der vorliegenden Erfindung besteht darin, während eines Einparkvorgangs eines Fahrzeugs den Verkehrsraum für den nachfolgenden Verkehr erst dann freizugeben, wenn keine Korrekturzüge im Verkehrsraum des nachfolgenden Verkehrs mehr erforderlich sind. Dies wird erreicht, indem dieser Verkehrsraum durch das einparkende Fahrzeug belegt bleibt, sodass für den nachfolgenden Verkehr offensichtlich ist, dass der Einparkvorgang nicht beendet ist und etwaige Korrekturzüge noch zu erwarten sind. Gefährliche Situationen durch ein Wiedereintreten des Fahrzeugs in den Verkehrsraum im Rahmen eines Korrekturzugs können vermieden werden.

Ein erster Aspekt der Erfindung betrifft ein computerimplementiertes Verfahren zum Unterstützen eines Einparkvorgangs eines Fahrzeugs von einer Ausgangsposition in eine Parkposition in einer Querparklücke.

Unter einem Fahrzeug kann jedes mobile Verkehrsmittel, beispielsweise ein Personenkraftwagen, verstanden werden. Das Fahrzeug verfügt über ein Parkassistenzsystem, mit dem der Einparkvorgang unterstützt werden kann. In einer einfachen Ausgestaltung gibt das Parkassistenzsystem Hinweise oder Anweisungen an den Fahrer aus. In einer weiteren Ausgestaltung kann das Parkassistenzsystem zur automatischen Querführung des Fahrzeugs ausgebildet sein. Dies bedeutet, dass die Lenkung des Fahrzeugs automatisch vom Parkassistenzsystem übernommen wird. In einer weiteren Ausgestaltung kann das Parkassistenzsystem zur automatischen Querführung des Fahrzeugs und zur automatischen Längsführung des Fahrzeugs ausgebildet sein. Dies bedeutet, dass neben der Lenkung des Fahrzeugs auch das Bremsen und Beschleunigen des Fahrzeugs sowie ein Richtungswechsel zwischen Vorwärtsfahrtrichtung und Rückwärtsfahrtrichtung, also z. B. eine Kontrolle des Fahrzeuggetriebes, teilweise oder vollständig automatisch erfolgen können. Letzteres wird englischsprachig auch als "fully assisted parking" bezeichnet.

Das vorgeschlagene Verfahren weist die im Folgenden näher erläuterten Schritte auf. Hierbei können die Schritte in der genannten Reihenfolge, je nach Bedarf jedoch auch gleichzeitig, zeitlich überlappend oder in einer abweichenden Reihenfolge durchgeführt werden. Das Verfahren wird computerimplementiert ausgeführt werden, d. h. mindestens ein Verfahrensschritt, bevorzugt mehrere oder alle Verfahrensschritte, werden unter Verwendung eines Computerprogramms ausgeführt werden.

Ein erster Verfahrensschritt sieht das Ermitteln einer Trajektorie, also eines Bewegungspfads, für eine Bewegung des Fahrzeugs in die Parkposition mit mindestens einem Einparkzug vor. Die Trajektorie kann beispielsweise von der Ausgangsposition zur Parkposition ermittelt werden. Daneben kann die Trajektorie periodisch oder fortlaufend aktualisiert werden, sodass die Trajektorie von der aktuellen Position des Fahrzeugs zur Parkposition ermittelt wird. Die Trajektorie kann für ein Absolvieren in Vorwärtsfahrtrichtung oder Rückwärtsfahrtrichtung vorgesehen sein, beispielsweise in Abhängigkeit davon, ob das Einparken vorwärts oder rückwärts erfolgen soll. Mit anderen Worten ist das vorgeschlagene Verfahren unabhängig von der Fahrtrichtung anwendbar, d. h. sowohl für ein Einparken in Rückwärtsfahrtrichtung als auch in Vorwärtsfahrtrichtung.

Je nach Ausbildung des Parkassistenzsystems kann die Trajektorie an den Fahrer ausgegeben werden, sodass dieser sein Fahrmanöver gemäß der Trajektorie durchführen kann. Alternativ kann die Trajektorie zur automatischen Querführung und ggf. Längsführung des Fahrzeugs genutzt werden.

Die Trajektorie sieht mindestens einen Einparkzug vor. Der erste Einparkzug beginnt dabei in der Ausgangsposition. Ein Einparkzug ist ein Fahrmanöver, das in Richtung Parkposition ausgeführt wird, d. h. das Fahrzeug nähert sich der Parkposition. Entsprechend erfolgen bei einem Einparkvorgang in Rückwärtsfahrtrichtung alle Einparkzüge in Rückwärtsfahrtrichtung und bei einem Einparkvorgang in Vorwärtsfahrtrichtung alle Einparkzüge in Vorwärtsfahrtrichtung.

Daneben kann die Trajektorie einen oder mehrere Korrekturzüge vorsehen. Ein Korrekturzug ist ein Fahrmanöver, bei dem sich das Fahrzeug von der Parkposition entfernt. Entsprechend erfolgen bei einem Einparkvorgang in Rückwärtsfahrtrichtung alle Korrekturzüge in Vorwärtsfahrtrichtung und bei einem Einparkvorgang in Vorwärtsfahrtrichtung alle Korrekturzüge in Rückwärtsfahrtrichtung.

Während des Einparkvorgangs wechseln sich Einparkzüge und Korrekturzüge ab, d. h. nach jedem Korrekturzug erfolgt ein Einparkzug und nach jedem Einparkzug erfolgt ein Korrekturzug, sofern mit diesem Einparkzug die Parkposition noch nicht erreicht sein sollte. Der Einparkvorgang umfasst also n Einparkzüge und n-1 Korrekturzüge mit n ≥ 1. Jeder Einparkzug bzw. Korrekturzug beginnt und endet üblicherweise bei Stillstand des Fahrzeugs und wird gemäß der ermittelten Trajektorie in Vorwärtsfahrtrichtung oder Rückwärtsfahrtrichtung absolviert. Jeder Einparkzug und jeder Korrekturzug beginnt folglich mit einem Richtungswechsel im Vergleich zu dem unmittelbar vorangegangenen Korrekturzug bzw. Einparkzug.

**In** einem weiteren Verfahrensschritt wird geprüft, ob die Trajektorie einen oder mehrere Korrekturzüge vorsieht. Korrekturzüge sind beispielsweise dann erforderlich, wenn die gewünschte Parkposition nicht mit dem ersten Einparkzug erreicht werden kann. Hierbei können verschiedene Kriterien festgelegt werden, anhand deren geprüft wird, ob die gewünschte Parkposition erreicht ist oder nicht. Derartige Kriterien können beispielsweise der Abstand des Fahrzeugs zu den die Querparklücke begrenzenden Fahrzeugen oder eine Verdrehung zwischen der Ausrichtung des Fahrzeugs und der Ausrichtung der Parklücke sein.

In einem weiteren Verfahrensschritt wird eine Blockierungslinie festgelegt. Die Blockierungslinie verläuft durch das in der Ausgangsposition positionierte Fahrzeug in Längsrichtung. In Längsrichtung bedeutet dabei, dass die Blockierungslinie das Fahrzeugheck und die Fahrzeugfront schneidet, also durch das Fahrzeugheck und die Fahrzeugfront verläuft. Die Blockierungslinie wird unabhängig von der Ausgestaltung und Begrenzung der Querparklücke, insbesondere unabhängig von die Querparklücke begrenzenden Fahrzeuge, festgelegt, so dass auf eine entsprechende Umfeldsensorik verzichtet und die Blockierungslinie mit im Vergleich zum Stand der Technik geringerem rechentechnischen Aufwand festgelegt werden kann. Zudem ist die Blockierungslinie gegenüber der aus dem Stand der Technik bekannten Sichtlinie auch in weiteren Anwendungsfällen, z. B. bei nicht geradlinigem Straßenverlauf, wodurch die Heck- bzw. Frontseiten der die Querparklücke begrenzenden Fahrzeuge nicht parallel zueinander angeordnet sind, festlegbar, so dass das vorgeschlagene Verfahren breiter einsetzbar ist.

Der Verfahrensschritt des Festlegens der Blockierungslinie kann zeitlich vor, zeitlich nach, zeitlich überlappend oder gleichzeitig mit dem Ermitteln der Trajektorie und dem Prüfen, ob die Trajektorie einen oder mehrere Korrekturzüge vorsieht, erfolgen. Optional kann das Festlegen der Blockierungslinie auch unter der Bedingung erfolgen, dass die Trajektorie einen oder mehrere Korrekturzüge vorsieht.

Wird ermittelt, dass die Trajektorie einen oder mehrere Korrekturzüge vorsieht, so wird in einem weiteren Verfahrensschritt ermittelt, ob die Blockierungslinie vor Ausführen des letzten Einparkzugs während eines vorangegangen Einparkzugs durch das Fahrzeug freigegeben sein wird. Mit anderen Worten wird geprüft, ob ein Einparkzug, welcher nicht der letzte Einparkzug ist, derart weit in Richtung Parkposition ausgeführt wurde oder ausgeführt werden würde, dass die Blockierungslinie zumindest zeitweise freigegeben wurde bzw. werden würde. Die Formulierung "während eines vorangegangenen Einparkzugs" bedeutet also, dass eine beliebig kurze Zeitdauer der Freigabe der Blockierungslinie ausreichend ist, nicht hingegen, dass die Blockierungslinie während des gesamten vorangegangenen Einparkzugs freigegeben sein muss.

Eine Freigabe der Blockierungslinie zu bejahen, falls das Fahrzeug zum Zeitpunkt der Prüfung die Blockierungslinie im Rahmen eines Einparkzugs bereits freigegeben hat, oder falls bei einer Bewegung des Fahrzeugs entlang der Trajektorie im Rahmen eines Einparkzugs die Blockierungslinie vor Ausführen des letzten Einparkzugs durch das Fahrzeug freigegeben werden wird.

Wird die Blockierungslinie vor Ausführen des letzten Einparkzugs während eines vorangegangenen Einparkzugs durch das Fahrzeug freigegeben sein, so wird ein Signal ausgegeben. Die Blockierungslinie kann beispielsweise als durch das Fahrzeug freigegeben angesehen werden, wenn eine Kontur des Fahrzeugs die Blockierungslinie nicht mehr berührt oder schneidet. Die Kontur des Fahrzeugs entspricht dabei einer äußeren Begrenzungslinie des Fahrzeugs.

Außerdem wird nicht nur geprüft werden, ob die Blockierungslinie vor Ausführen des letzten Einparkzugs durch das Fahrzeug während eines vorangegangen Einparkzugs freigegeben sein wird, sondern zusätzlich, ob die Blockierungslinie vor Ausführen des letzten Einparkzugs durch das Fahrzeug während eines vorangegangen Korrekturzugs freigegeben sein wird. Mit anderen Worten wird geprüft, ob die Blockierungslinie vor Ausführen des letzten Einparkzugs weder in Richtung der der Parkposition zugewandten Seite noch in Richtung der der Parkposition abgewandten Seite freigegeben wurde.

Hierdurch kann verhindert werden, dass der nachfolgende Verkehr zwischen dem einparkenden Fahrzeug und der Querparklücke hindurchfährt, falls beispielsweise im Rahmen eines Korrekturzugs ein besonders weites Herausfahren aus der Querparklücke erforderlich sein sollte.

Das ausgegebene Signal kann beispielsweise das Ermitteln einer korrigierten Trajektorie bewirken. Die Korrektur erfolgt dabei derart, dass das Freigeben der Blockierungslinie durch das Fahrzeug vor Ausführen des letzten Einparkzugs verhindert wird.

Die korrigierte Trajektorie kann anschließend an den Fahrer ausgegeben werden, sodass dieser sein Fahrmanöver an der korrigierten Trajektorie ausrichten kann. Alternativ kann die korrigierte Trajektorie einer automatischen Querführung und gegebenenfalls Längsführung des Fahrzeugs zugrunde gelegt werden. Mit anderen Worten kann das Verfahren ein automatisches Querführen und ggf. Längsführen des Fahrzeugs entlang der korrigierten Trajektorie umfassen.

Alternativ oder zusätzlich kann das ausgegebene Signal ein Unterbrechen des Einparkvorgangs und ein Ausgeben einer Warnmeldung, z. B. an den Fahrer des Fahrzeugs, bewirken. Die Warnmeldung kann beispielsweise derart ausgestaltet sein, dass der Fahrer aufgefordert wird, den nachfolgenden Verkehr zu beachten. Zudem kann vorgesehen sein, dass der Einparkvorgang erst fortgesetzt werden kann oder wird, falls ein Bestätigungssignal vorliegt, welches einen freien Verkehrsraum im Bereich des Korrekturzugs und/oder Einparkzugs bestätigt. Das Bestätigungssignal kann beispielsweise durch den Fahrer initiiert werden.

Das Freigeben bzw. Nicht-Freigeben der Blockierungslinie ist im Wesentlichen gleichbedeutend mit einem Freigeben bzw. Nicht-Freigeben des Verkehrsraums, der zur Durchführung von Korrekturzügen und Einparkzügen zum Erreichen der Parkposition benötigt wird. Hierfür wird der Verlauf der Blockierungslinie derart festgelegt, dass ein Einfahren von nachfolgenden Fahrzeugen in diesen Verkehrsraum behindert wird, solange das einparkende Fahrzeug die Blockierungslinie nicht freigegeben hat.

Im Ergebnis kann der Einparkvorgang schneller abgeschlossen werden, da eine Unterbrechung durch nachfolgenden Verkehr nicht zu erwarten ist. Darüber hinaus wird die Verkehrssicherheit sowohl für das einparkende Fahrzeug als auch für den nachfolgenden Verkehr erhöht, da ein Wiederanfahren oder Beschleunigen des nachfolgenden Verkehrs erst nach Abschluss des Einparkvorgangs bzw. kurz vor Abschluss des Einparkvorgangs, wenn kein weiterer Korrekturzug zurück in Richtung Fahrbahn mehr erforderlich ist, ermöglicht wird.

Untersuchungen der Erfinder der vorliegenden Erfindung zeigten zudem, dass ein geradliniger Verlauf der Blockierungslinie durch das in der Ausgangsposition positionierte Fahrzeug in Längsrichtung in nahezu allen Anwendungsfällen ausreichend ist, um den für die Ausführung der Korrekturzüge freizuhaltenden Verkehrsraum festzulegen. Eine Festlegung des freizuhaltenden Verkehrsraums als solchem mit konkreten flächigen oder räumlichen Begrenzungen erübrigt sich daher. Weiterführende Berechnungen lassen sich unter Berücksichtigung der Blockierungslinie einfacher und ressourcenschonender durchführen als bei Berücksichtigung einer zweidimensionalen Fläche oder sogar eines dreidimensionalen Raums.

Wird eine korrigierte Trajektorie ermittelt, um das Freigeben der Blockierungslinie durch das Fahrzeug vor Ausführen des letzten Einparkzugs zu verhindern, so kann diese korrigierte Trajektorie vorteilhaft im Rahmen einer zumindest automatischen Querführung des Fahrzeugs berücksichtigt werden. Dies ermöglicht ein sicheres, zumindest teilweise automatisches Einparken des Fahrzeugs.

Die anspruchsvolle Aufgabe der Überwachung des nachfolgenden Verkehrs und der gesamten Verkehrssituation durch den Fahrer während des Einparkvorgangs, z. B. bei einem SAE Level 2 System, kann unterstützt werden, so dass sowohl die Verkehrssicherheit als auch der Fahrkomfort verbessert werden können. Zudem kann die Erfindung auch bei autonomen Fahrzeugen des SAE Levels 4-5 zur Anwendung kommen und ein Einparken von fahrerlos betriebenen Fahrzeugen in Kombination mit weiteren Funktionen und Verfahren ermöglichen.

Bewirkt das ausgegebene Signal ein Unterbrechen des Einparkvorgangs und ein Ausgeben einer Warnmeldung an den Fahrer, so wird die Verkehrssicherheit beim Einparken erhöht, da der Fahrer auf die potenziell gefährliche Situation hingewiesen wird. Ist darüber hinaus vorgesehen, dass der Einparkvorgang erst fortgesetzt werden kann, falls ein Bestätigungssignal vorliegt, welches einen freien Verkehrsraum im Bereich des Korrekturzugs und/oder Einparkzugs bestätigt, so wird der Fahrer in den Einparkvorgang (wieder) eingebunden und die Verkehrssicherheit wird durch zusätzliche Überwachung des Verkehrsraums durch den Fahrer erhöht.

Im Folgenden werden verschiedene Möglichkeiten erläutert, wie die Blockierungslinie festgelegt werden kann.

Gemäß verschiedenen Ausführungsvarianten kann die Blockierungslinie geradlinig verlaufend und/oder parallel zu einer Begrenzung der Fahrbahn verlaufend festgelegt werden.

Die Blockierungslinie kann also eine Gerade im geometrischen Sinn sein. Dies ermöglicht ein einfaches Festlegen der Blockierungslinie sowie Prüfen, ob die Blockierungslinie vor Ausführen des letzten Einparkzugs durch das Fahrzeug freigegeben sein wird.

Alternativ oder zusätzlich kann die Blockierungslinie parallel zu einer Begrenzung der Fahrbahn verlaufen. Hierbei kann ein einzuhaltender Abstand zwischen Fahrbahnbegrenzung und Blockierungslinie vorgegeben werden. Dies ermöglicht vorteilhaft eine Blockierung des Verkehrsraums im Bereich der Querparklücke auch bei einem gekrümmten Fahrbahnverlauf.

Gemäß weiteren Ausführungsvarianten kann die Blockierungslinie parallel zu einer Längsachse des Fahrzeugs verlaufend festgelegt werden.

Die Längsachse eines Fahrzeugs bezeichnet hierbei diejenige Achse, die in Richtung der größten Ausdehnung des Fahrzeugs verläuft. Regelmäßig verläuft die Längsachse mittig durch die Fahrzeugfront und das Fahrzeugheck. Optional kann die Blockierungslinie entlang der Längsachse verlaufend festgelegt werden. Mit anderen Worten kann die Blockierungslinie eine Verlängerung der Längsachse des Fahrzeugs entsprechen.

Weiter optional kann die Blockierungslinie mit einem vorgebbaren Abstand zur Längsachse des Fahrzeugs verlaufend festgelegt werden. Ein solcher Abstand kann in Abhängigkeit verschiedener Einflussgrößen festgelegt sein oder werden. Mögliche Einflussgrößen sind beispielsweise die Fahrbahnbreite in der Ausgangsposition sowie die Anzahl der Fahrspuren in die gleiche oder in unterschiedliche Fahrtrichtungen. Informationen zu diesen Einflussgrößen können beispielsweise aus einer Datenbank abgerufen werden, in der die entsprechenden Werte für unterschiedliche Positionen gespeichert sind. Die Ausgangsposition des Fahrzeugs kann beispielsweise mittels eines globalen Navigationssatellitensystems, zum Beispiel GPS, ermittelt werden.

Eine Festlegung des Verlaufs der Blockierungslinie in Abhängigkeit von der Längsachse des Fahrzeugs stellt eine einfache Möglichkeit der Festlegung der Blockierungslinie dar, da keine weitere Sensorik zur Identifizierung von etwaigen Bezugspunkten, wie zum Beispiel Fahrbahnmarkierungen, weiteren Fahrzeugen etc., notwendig ist. Dadurch werden zugleich mögliche Fehlerquellen bei der Festlegung der Blockierungslinie eliminiert.

Gemäß weiteren Ausführungsvarianten kann die Blockierungslinie mittig zwischen Begrenzungen einer Fahrbahn, auf der sich die Ausgangsposition befindet, verlaufend festgelegt werden.

Begrenzungen der Fahrbahn können mittels üblicher Sensoren, wie Kamerasensoren, Ultraschallsensoren, RADAR-Sensoren und LIDAR-Sensoren, etc., detektiert werden.

Durch Einbeziehung der Fahrbahnbegrenzungen bei der Festlegung der Blockierungslinie kann der für die Durchführung des Korrekturzugs erforderliche Verkehrsraum genauer festgelegt werden. Ein zu frühzeitiges Freigeben dieses Verkehrsraums kann dadurch mit größerer Wahrscheinlichkeit vermieden werden. Die Verkehrssicherheit kann insgesamt weiter verbessert werden.

Ein weiterer Aspekt der Erfindung betrifft ein Parkassistenzsystem zum Unterstützen eines Einparkvorgangs eines Fahrzeugs. Das Parkassistenzsystem umfasst Mittel zur Ausführung eines der vorstehend beschriebenen Verfahren. Das Parkassistenzsystem ist folglich zur Ausführung eines der vorstehend beschriebenen Verfahren ausgebildet und die obigen Ausführungen zur Erläuterung der Verfahren dienen auch zu Beschreibung des erfindungsgemäßen Parkassistenzsystems. Mit dem erfindungsgemäßen Parkassistenzsystem sind die Vorteile der Verfahren entsprechend verbunden.

Das Parkassistenzsystem kann insbesondere eine Verarbeitungseinheit aufweisen, die ausgebildet ist zum Ermitteln einer Trajektorie für eine Bewegung des Fahrzeugs in die Parkposition, zum Prüfen, ob die Trajektorie einen oder mehrere Korrekturzüge vorsieht, zum Festlegen einer geradlinig und durch das in der Ausgangsposition positionierte Fahrzeug in Längsrichtung verlaufenden Blockierungslinie und zum Prüfen, ob die Blockierungslinie vor Ausführen des letzten Einparkzugs während eines vorangegangen Einparkzugs und, optional, während eines vorangegangen Korrekturzugs durch das Fahrzeug freigegeben sein wird. Wird die Blockierungslinie vor Ausführen des letzten Einparkzugs durch das Fahrzeug freigegeben sein, so erzeugt die Verarbeitungseinheit ein Signal. Das Signal kann intern in der Verarbeitungseinheit verarbeitet werden und das Ermitteln einer korrigierten Trajektorie mittels der Verarbeitungseinheit bewirken.

Optional kann das Parkassistenzsystem eine Ausgabeeinheit aufweisen, die zum Ausgeben einer Warnmeldung ausgebildet ist, falls die Blockierungslinie vor Ausführen des letzten Einparkzugs durch das Fahrzeug freigegeben sein wird. Die Ausgabeeinheit kann beispielsweise als Bildsignalausgabeeinheit und/oder Tonsignalausgabeeinheit ausgebildet sein.

Darüber hinaus kann das Parkassistenzsystem eine Eingabeeinheit, beispielsweise zur benutzerspezifischen Eingabe und Auswahl von Optionen, und eine Speichereinheit aufweisen.

Das Parkassistenzsystem kann bevorzugt zur zumindest automatischen Querführung eines Fahrzeugs während eines Einparkvorgangs ausgebildet sein. Optional kann das Parkassistenzsystem auch zur teilweise oder vollständig automatischen Längsführung des Fahrzeugs während eines Einparkvorgangs ausgebildet sein. Hierfür kann das Parkassistenzsystem mit einer Steuereinheit des Fahrzeugs zusammenwirken und signalübertragend mit dieser verbunden sein.

Ein weiterer Aspekt der Erfindung betrifft ein Computerprogramm. Das Computerprogramm umfasst Befehle, die bei der Ausführung des Programms durch einen Computer diesen veranlassen, eines der vorstehend erläuterten Verfahren auszuführen.

Mit dem vorgeschlagenen Computerprogramm sind daher die Vorteile der beschriebenen Verfahren entsprechend verbunden. Unter einem Computerprogramm kann ein auf einem geeigneten Medium speicherbarer und/oder über ein geeignetes Medium abrufbarer Programmcode verstanden werden. Zum Speichern des Programmcodes kann jedes zum Speichern von Software geeignete Medium, beispielsweise ein in einem Steuergerät verbauter nichtflüchtiger Speicher, eine DVD, ein USB-Stick, eine Flashcard oder dergleichen, Verwendung finden. Das Abrufen des Programmcodes kann beispielsweise über das Internet oder ein Intranet erfolgen oder über ein anderes geeignetes drahtloses oder kabelgebundenes Netzwerk.

Die Erfindung wird nachfolgend anhand der Abbildungen und der zugehörigen Beschreibung näher erläutert. Es zeigen:
- Fig. 1: ein Ablaufschema eines beispielhaften Verfahrens;
- Fig. 2: eine schematische Darstellung eines beispielhaften Einparkvorgangs mit dem Fahrzeug in der Ausgangsposition (Fig. 2a), während des Korrekturzugs (Fig. 2b) und in der Parkposition (Fig. 2c);
- Fig. 3: eine schematische Darstellung eines beispielhaften Parkassistenzsystems; und
- Fig. 4: eine schematische Darstellung eines weiteren beispielhaften Parkassistenzsystems.

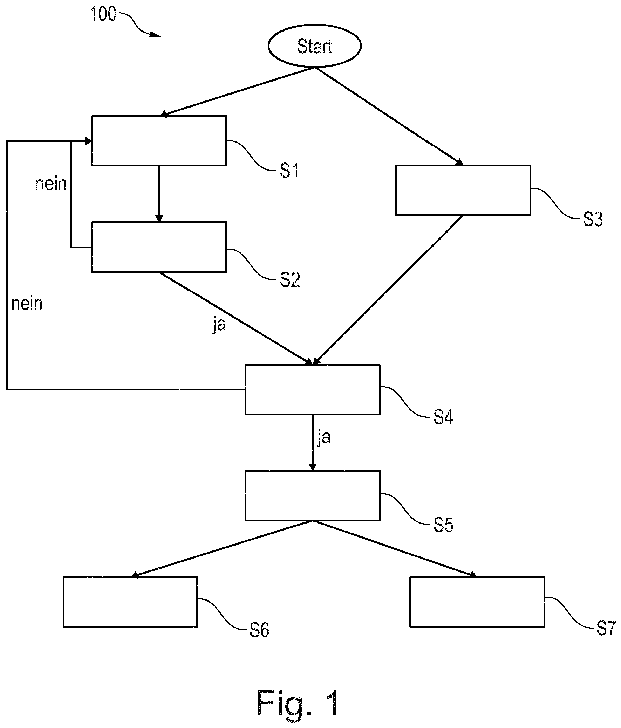

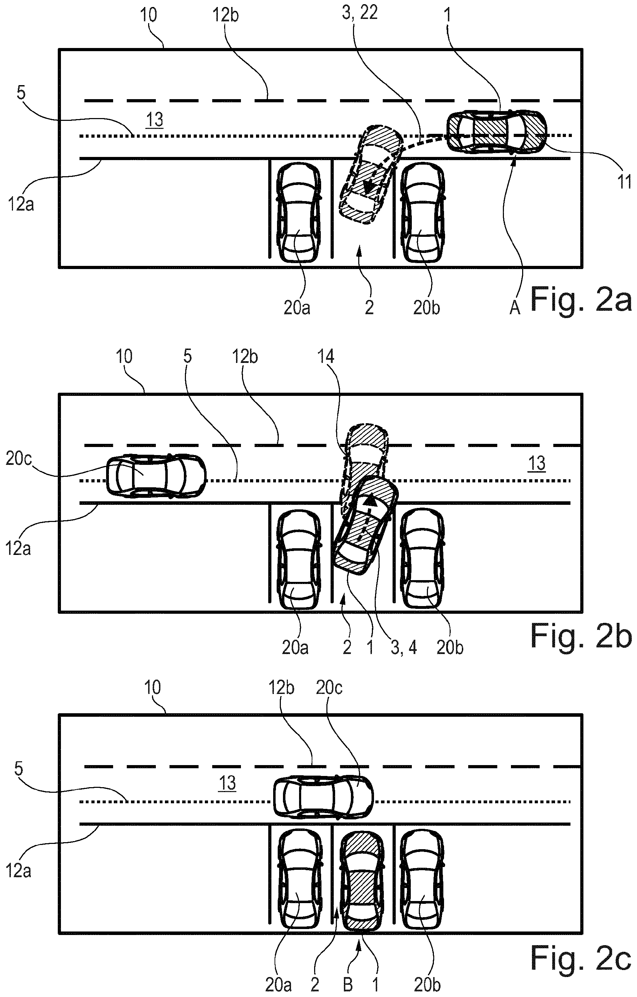

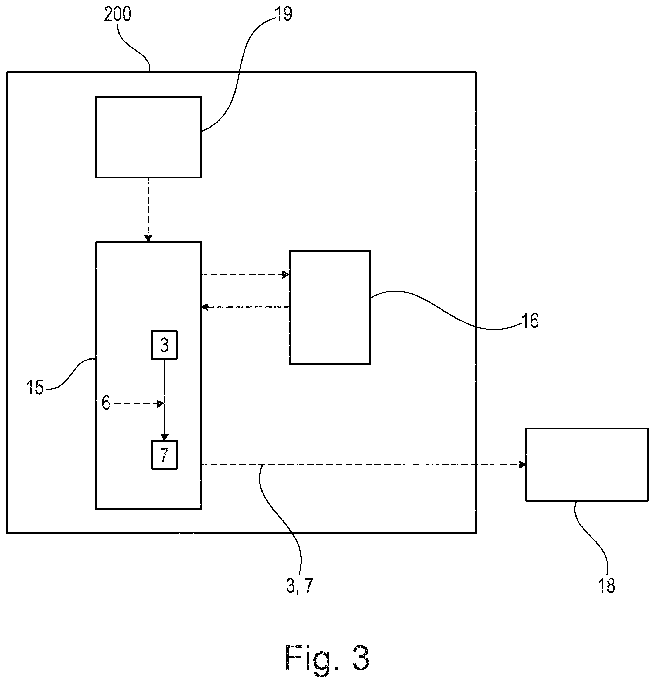

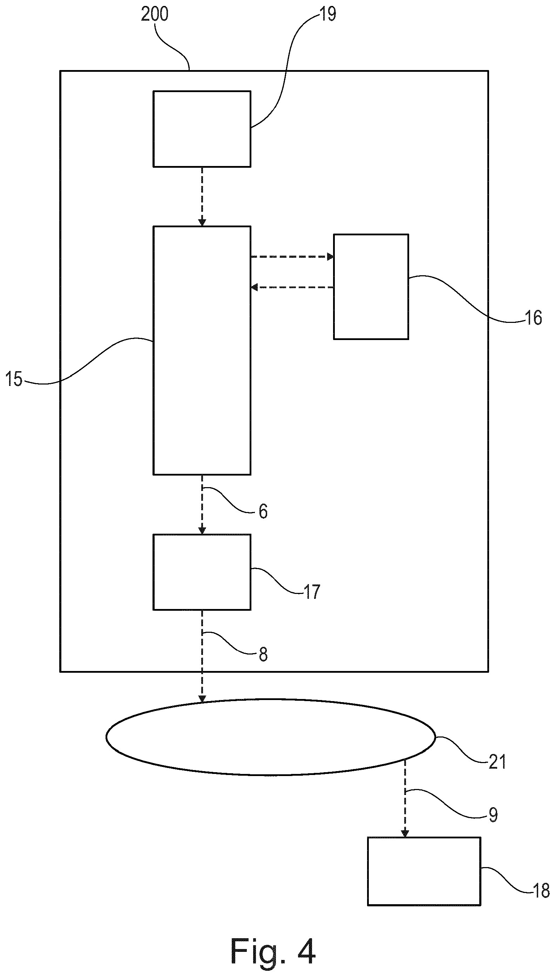

In Figur 1 ist ein Ablaufschema eines beispielhaften computerimplementierten Verfahrens 100 zum Unterstützen eines Einparkvorgangs eines Fahrzeugs 1, beispielsweise eines Personenkraftwagens, dargestellt. Das Verfahren 100 kann mittels eines Parkassistenzsystems 200, beispielsweise wie zu den Figuren 3 oder 4 beschrieben, ausgeführt werden. Im Rahmen des Verfahrens 100 bewegt sich das Fahrzeug 1 von einer Ausgangsposition A in eine Parkposition B, wobei sich die Parkposition B in einer Querparklücke 2 befindet. Ein solcher Einparkvorgang ist schematisch in den Figuren 2a bis 2c dargestellt. In Figur 2 ist das Fahrzeug 1 in der aktuellen Position mit durchgezogener Kontur, in der nachfolgenden zukünftigen Position hingegen mit gestrichelter Kontur dargestellt Das Verfahren 100 weist die nachfolgend erläuterten Verfahrensschritte S1 bis S7 auf.

Zum Start des Verfahrens 100 befindet sich das Fahrzeug 1 in der Ausgangsposition A auf der Fahrbahn 13, die durch als Fahrbahnmarkierungen ausgebildete Begrenzungen 12a, 12b begrenzt wird (siehe Figur 2a). Ausgehend von der Ausgangsposition A möchte das Fahrzeug 1 in die Querparklücke 2 einparken und die Parkposition B (siehe Figur 2c) einnehmen. Die Querparklücke 2 wird, wie in Figur 2 gezeigt, von zwei weiteren Fahrzeugen 20a, 20b seitlich begrenzt.

Im Verfahrensschritt S1 wird eine Trajektorie 3 für die Bewegung des Fahrzeugs 1 von der Ausgangsposition A in die Parkposition B ermittelt, die mindestens einen Einparkzug 22 umfasst. Im nachfolgenden Verfahrensschritte S2 wird geprüft, ob die Trajektorie 3 einen oder mehrere Korrekturzüge 4 vorsieht. Ist dies nicht der Fall, so geht das Verfahren 100 zurück zu Verfahrensschritt S1 und es wird erneut eine Trajektorie 3 ausgehend von der aktuellen Position des Fahrzeugs 1 ermittelt. D. h. die Trajektorie 3 wird fortlaufend aktualisiert, bis entweder festgestellt wird, dass ein oder mehrere Korrekturzüge 4 erforderlich sind oder das Fahrzeug 1 die Parkposition B erreicht hat.

Wird im Verfahrensschritt S2 hingegen festgestellt, dass die Trajektorie 3 einen oder mehrere Korrekturzüge 4 vorsieht, so geht das Verfahren 100 weiter zu Verfahrensschritt S4. Dies ist bei dem in Figur 2 dargestellten Einparkvorgang der Fall. Der erforderliche Korrekturzug 4 ist in Figur 2b gezeigt.

Zeitlich parallel zu den Verfahrensschritten S1 und S2 wird im Verfahrensschritt S3 eine Blockierungslinie 5 festgelegt. Die Blockierungslinie 5 verläuft geradlinig und durch das in der Ausgangsposition A positionierte Fahrzeug 1 in Längsrichtung, genauer entlang der Längsachse 11 des Fahrzeugs 1.

Im Verfahrensschritt S4 wird anschließend geprüft, ob die Blockierungslinie 5 vor Ausführen des letzten Einparkzugs 22 durch das Fahrzeug 1 freigegeben sein wird. Im Ausführungsbeispiel erfolgt diese Prüfung sowohl in Bezug auf alle vorangegangenen Einparkzüge 22 als auch alle vorangegangen Korrekturzüge 4.

Ist dies nicht der Fall, so geht es Verfahren 100 zurück zu Verfahrensschritt S1. Wird hingegen festgestellt, dass die Blockierungslinie 5 vor Ausführen des letzten Einparkzugs 22 durch das Fahrzeug 1 freigegeben sein wird, so geht das Verfahren 100 weiter zu Verfahrensschritt S5.

Im Verfahrensschritt S5 wird ein Signal 6 ausgegeben. Je nach Ausbildung des Parkassistenzsystems 200 kann das Signal 6 gemäß Verfahrensschritt S6 und/oder gemäß Verfahrensschritt S7 weiterverarbeitet werden.

Verfahrensschritt S6 sieht vor, dass das ausgegebene Signal 6 das Ermitteln einer korrigierten Trajektorie 7 bewirkt, und zwar derart, dass das Freigeben der Blockierungslinie 5 durch das Fahrzeug 1 vor Ausführen des letzten Einparkzugs 22 verhindert wird. Die korrigierte Trajektorie 7 kann beispielsweise an einen Fahrer des Fahrzeugs 1 ausgegeben werden, zum Beispiel auf einem Display als Ausgabeeinheit 17 angezeigt werden. Alternativ oder zusätzlich kann die korrigierte Trajektorie 7 vom Parkassistenzsystem 200 zum automatischen Einparken genutzt werden, beispielsweise zur automatischen Querführung und/oder Längsführung.

Verfahrensschritt S7 sieht vor, dass das ausgegebene Signal 6 ein Unterbrechen des Einparkvorgangs und ein Ausgeben einer Warnmeldung 8 an einen Fahrer 21 des Fahrzeugs 1 bewirkt. Hierbei kann vorgesehen sein, dass der Einparkvorgang erst fortgesetzt werden kann, falls ein Bestätigungssignal 9 vorliegt, welches einen freien Verkehrsraum 10 im Bereich der Korrekturzüge 4 und/oder der Einparkzüge 22 bestätigt. Nach dem Verfahrensschritt S6 bzw. S7 kann das Verfahren 100 beendet sein oder beginnend mit Schritt S1 erneut durchgeführt werden.

In den Figuren 2a bis 2c ist ein Verkehrsraum 10 schematisch dargestellt, in dem ein Einparkvorgang stattfinden soll. Im Verkehrsraum 10 befindet sich eine Fahrbahn 13, die durch die Begrenzungen 12a, 12b seitlich begrenzt wird.

Wie bereits erwähnt befindet sich das Fahrzeug 1 in Figur 2a in der Ausgangsposition A und möchte in die Querparklücke 2 einparken. Hierzu ist das Fahrzeug 1 zunächst in Vorwärtsfahrtrichtung an der Querparklücke 2 vorbeigefahren und hat nach Passieren des die Querparklücke 2 begrenzenden weiteren Fahrzeugs 20b ungefähr mittig auf der Fahrbahn 13 gestoppt.

Das Fahrzeug 1 weist ein Parkassistenzsystem 200 auf. Das Parkassistenzsystem 200 ermittelt nun ausgehend von der Ausgangsposition A eine Trajektorie 3, entlang derer sich das Fahrzeug 1 bewegen muss, um in die Parkposition B zu gelangen. Hierbei ist vorgesehen, dass das Fahrzeug 1 rückwärts in die Querparklücke 2 eingeparkt. Der Einparkvorgang sowie das zugehörige Verfahren 100 können analog auf einen Vorwärtseinparkvorgang übertragen werden. Parallel zum Ermitteln der Trajektorie 3 wird die Blockierungslinie 5 festgelegt, die geradlinig entlang der Längsachse 11 des Fahrzeugs 1 in der Ausgangsposition A verläuft.

Der Einparkvorgang beginnt mit einem ersten Einparkzug 22, bei dem das Fahrzeug 1, wie in Figur 2a gezeigt, zunächst teilweise rückwärts in die Querparklücke 2 eintaucht. Bei der Ermittlung der Trajektorie 3 wurde zuvor festgestellt, dass die Parkposition B nicht mit diesem ersten Einparkzug 22 erreichbar ist, sondern dass ein Korrekturzug 4erforderlich ist.

Figur 2b zeigt das Fahrzeug 1 zu Beginn des Korrekturzugs 4. Während des ersten Einparkzugs 22 wurde das Fahrzeug 1 nur soweit rückwärts bewegt, dass die Blockierungslinie 5 nicht durch das Fahrzeug 1 freigegeben wird. Mit anderen Worten berührt oder schneidet die Kontur 14 des Fahrzeugs 1 stets die Blockierungslinie 5. Dadurch wird die Fahrbahn 13 bis zur Ausführung des letzten Einparkzugs 22 blockiert. Der nachfolgende Verkehr in Form des weiteren Fahrzeugs 20c kann den Bereich vor der Querparklücke 2 daher erst passieren, wenn der Einparkvorgang nahezu abgeschlossen ist. Mit anderen Worten wird bewirkt, dass das weitere Fahrzeug 20c stoppt und erst wieder beschleunigt, wenn mit Durchführung des letzten Einparkzugs 22 die Fahrbahn 13 wieder freigegeben wird.

Dass die Kontur des Fahrzeugs 1 die Blockierungslinie 5 stets berührt oder schneidet, wird entweder bereits beim Prüfen, ob die Blockierungslinie 5 vor Ausführen des letzten Einparkzugs 22 durch das Fahrzeug 1 freigegeben sein wird, festgestellt oder dadurch sichergestellt, dass eine korrigierte Trajektorie 7 ermittelt wird, bei der dies der Fall ist.

Figur 2c zeigt das Fahrzeug 1 in der Parkposition B. Der für den Einparkvorgang erforderliche Verkehrsraum 10 kann nun wieder freigegeben werden, sodass das weitere Fahrzeug 20c die Querparklücke passieren kann.

Figur 3 zeigt ein erstes Ausführungsbeispiel eines Parkassistenzsystems 200. Das Parkassistenzsystem 200 kann zur Ausführung des beispielhaften Verfahrens 100, welches vorstehend unter Bezugnahme auf die Figuren 1 und 2 näher erläutert wurde, genutzt werden.

Das Parkassistenzsystem 200 weist eine Verarbeitungseinheit 15 auf, die in einer signaltechnischen Wirkverbindung mit einer Steuereinheit 18 des Fahrzeugs 1 steht. Die Verarbeitungseinheit 15 kann Eingangsdaten basierend auf Anweisungen oder einem in der Verarbeitungseinheit 15 programmierten Code entsprechend einer oder mehrerer Routinen verarbeiten.

Insbesondere ist die Verarbeitungseinheit 15 dazu ausgebildet, eine Trajektorie 3 für eine Bewegung des Fahrzeugs ein von seiner aktuellen Position, beispielsweise der Ausgangsposition A, in die Parkposition B zu ermitteln und zu prüfen, ob die Trajektorie 3 einen oder mehrere Korrekturzüge 4 vorsieht. Des Weiteren ist die Verarbeitungseinheit 15 zum Festlegen einer geradlinig und durch das in der Ausgangsposition A positionierte Fahrzeug 1 in Längsrichtung verlaufenden Blockierungslinie 5 ausgebildet. Zudem kann die Verarbeitungseinheit 5 prüfen, ob die Blockierungslinie 5 vor Ausführen des letzten Einparkzugs 22 durch das Fahrzeug 1 freigegeben sein wird. Ist dies der Fall, so generiert die Verarbeitungseinheit 15 ein Signal 6.

In der in Figur 3 gezeigten Ausführungsvariante bewirkt das Signal 6 ein Ermitteln einer korrigierten Trajektorie 7 derart, dass das Freigeben der Blockierungslinie 5 durch das Fahrzeug 1 vor Ausführen des letzten Einparkzugs 22 verhindert wird.

Sowohl die ursprüngliche Trajektorie 3 als auch die korrigierte Trajektorie 7 werden an die Steuereinheit 18 des Fahrzeugs 1 übertragen und können von der Steuereinheit 18 zumindest zur automatischen Querführung des Fahrzeugs 1, gegebenenfalls auch zur automatischen Längsführung des Fahrzeugs 1, genutzt werden.

Neben der Verarbeitungseinheit 15 weist das Parkassistenzsystem 200 eine Speichereinheit 16 auf, die mit der Verarbeitungseinheit 15 in einer signaltechnischen Wirkverbindung steht. Dadurch können Daten in der Speichereinheit 16 gespeichert werden und bei Bedarf wieder von der Speichereinheit 16 abgerufen werden.

Außerdem weist das Parkassistenzsystem 200 eine Eingabeeinheit 19 auf, mit der ein Nutzer des Fahrzeugs 1, beispielsweise der Fahrer 21, Eingaben tätigen kann und beispielsweise Vorgaben für den Verarbeitungsvorgang in der Verarbeitungseinheit 15 festlegen kann.

Figur 4 zeigt ein weiteres beispielhaftes Parkassistenzsystem 200. Im Vergleich zum Parkassistenzsystem 200 der Figur 3 ist hier kein direktes Zusammenwirken des Parkassistenzsystems 200 mit einer Steuereinheit 18 des Fahrzeugs 1 vorgesehen. Vielmehr bewirkt in diesem Ausführungsbeispiel das ausgegebene Signal 6 ein Unterbrechen des Einparkvorgangs und ein Ausgeben einer Warnmeldung 8.

Hierfür verfügt das Parkassistenzsystem 200 über eine Ausgabeeinheit 17, die beispielsweise in Form eines Displays zur Bildausgabe und optional auch Tonausgabe ausgebildet sein kann. Die Ausgabeeinheit 17 steht in einer signaltechnischen Wirkverbindung mit der Verarbeitungseinheit 15. Basierend auf dem Signal 6 kann die Ausgabeeinheit 17 einer Warnmeldung 8 generieren und an den Fahrer 21 des Fahrzeugs 1 ausgeben, beispielsweise in Form einer optischen Anzeige auf dem Display oder einer akustischen Warnung.

Hierbei ist außerdem vorgesehen, dass der Einparkvorgang erst fortgesetzt werden kann, falls ein Bestätigungssignal 9 vorliegt, welches einen freien Verkehrsraum 10 im Bereich des Korrekturzugs 4 und/oder des Einparkzugs 22 bestätigt. Mit anderen Worten wird der Fahrer 21 dazu angehalten, den relevanten Bereich des Verkehrsraums 10 dahingehend zu prüfen, ob ein gefahrloses Durchführen des Korrekturzugs 4 möglich ist.

Die in Figur 3 und Figur 4 gezeigten Ausführungsbeispiele eines Parkassistenzsystems 200 können auch miteinander kombiniert werden. Mit anderen Worten kann vorgesehen sein, dass die Verarbeitungseinheit 15 wie zu Figur 3 beschrieben in einer signaltechnischen Wirkverbindung mit der Steuereinheit 18 des Fahrzeugs 1 steht und Trajektorien 3, 7 an diese übertragen kann, sodass zumindest eine automatischen Querführung des Fahrzeugs 1 ermöglicht ist. Gleichzeitig kann eine Warnmeldung 8 an den Fahrer 21 ausgegeben werden, falls festgestellt wird, dass die Blockierungslinie 5 vor Ausführen des letzten Einparkzugs 22 durch das Fahrzeug 1 freigegeben sein wird. Der Einparkvorgang mit zumindest automatischer Querführung kann dann erst fortgesetzt werden, falls das Bestätigungssignal 9.

### Bezugszeichenliste

- 1: Fahrzeug
- 2: Querparklücke
- 3: Trajektorie
- 4: Korrekturzug
- 5: Blockierungslinie
- 6: Signal
- 7: korrigierte Trajektorie
- 8: Warnmeldung
- 9: Bestätigungssignal
- 10: Verkehrsraum
- 11: Längsachse
- 12a, 12b: Begrenzung
- 13: Fahrbahn
- 14: Kontur
- 15: Verarbeitungseinheit
- 16: Speichereinheit
- 17: Ausgabeeinheit
- 18: Steuereinheit des Fahrzeugs
- 19: Eingabeeinheit
- 20a, 20b, 20c: weiteres Fahrzeug
- 21: Fahrer
- 22: Einparkzug

- 100: Verfahren
- 200: Parkassistenzsystem

- A: Ausgangsposition
- B: Parkposition

- S1: Ermitteln einer Trajektorie für eine Bewegung des Fahrzeugs in die Parkposition mit mindestens einem Einparkzug
- S2: Prüfen, ob die Trajektorie einen oder mehrere Korrekturzüge vorsieht
- S3: Festlegen einer durch das in der Ausgangsposition positionierte Fahrzeug in Längsrichtung verlaufenden Blockierungslinie
- S4: Prüfen, ob die Blockierungslinie vor Ausführen des letzten Einparkzugs durch das Fahrzeug freigegeben sein wird
- S5: Ausgeben eines Signals
- S6: Ermitteln einer korrigierten Trajektorie derart, dass das Freigeben der Blockierungslinie durch das Fahrzeug vor Ausführen des letzten Einparkzugs verhindert wird
- S7: Unterbrechen des Einparkvorgangs und Ausgeben einer Warnmeldung an den Fahrer

## Patentansprüche

1. Computerimplementiertes Verfahren (100) zum Unterstützen eines Einparkvorgangs eines Fahrzeugs (1) von einer Ausgangsposition (A) in eine Parkposition (B) in einer Querparklücke (2), das Verfahren (100) aufweisend die folgenden Schritte:
- (S1): Ermitteln einer Trajektorie (3) für eine Bewegung des Fahrzeugs (1) in die Parkposition (B) mit mindestens einem Einparkzug (22),
- (S2): Prüfen, ob die Trajektorie (3) einen oder mehrere Korrekturzüge (4) vorsieht,
- (S3): Festlegen einer durch das in der Ausgangsposition (A) positionierte Fahrzeug (1) in Längsrichtung verlaufenden Blockierungslinie (5),
- falls die Trajektorie (3) einen oder mehrere Korrekturzüge (4) vorsieht, (S4): Prüfen, ob die Blockierungslinie (5) vor Ausführen des letzten Einparkzugs (22) durch das Fahrzeug (1) während eines vorangegangen Einparkzugs (22) und eines vorangegangen Korrekturzugs (4) freigegeben sein wird, und
- falls die Blockierungslinie (5) vor Ausführen des letzten Einparkzugs (22) während eines vorangegangen Einparkzugs (22) und/oder eines vorangegangen Korrekturzugs (4) durch das Fahrzeug (1) freigegeben sein wird, (S5): Ausgeben eines Signals (6).

2. Verfahren nach Anspruch 1, wobei das ausgegebene Signal (6) ein Ermitteln einer korrigierten Trajektorie (7) derart bewirkt, dass das Freigeben der Blockierungslinie (5) durch das Fahrzeug (1) vor Ausführen des letzten Einparkzugs (22) während eines vorangegangen Einparkzugs (22) und/oder während eines vorangegangenen Korrekturzugs (4) verhindert wird (S6).

3. Verfahren nach Anspruch 2, wobei die korrigierte Trajektorie (7) an den Fahrer ausgegeben wird oder im Rahmen einer zumindest automatischen Querführung des Fahrzeugs berücksichtigt wird.

4. Verfahren (100) nach einem der vorstehenden Ansprüche, wobei das ausgegebene Signal (6) ein Unterbrechen des Einparkvorgangs und ein Ausgeben einer Warnmeldung (8) bewirkt (S7).

5. Verfahren (100) nach Anspruch 4, wobei der Einparkvorgang erst fortgesetzt werden kann, falls ein Bestätigungssignal (9) vorliegt, welches einen freien Verkehrsraum (10) im Bereich des Korrekturzugs (4) und/oder Einparkzugs (22) bestätigt.

6. Verfahren (100) nach einem der vorstehenden Ansprüche, wobei die Blockierungslinie (5) geradlinig verlaufend und/oder parallel zu einer Begrenzung (12a, 12b) der Fahrbahn (13) verlaufend festgelegt wird.

7. Verfahren (100) nach einem der vorstehenden Ansprüche, wobei die Blockierungslinie (5) parallel zu einer Längsachse (11) des Fahrzeugs (1) verlaufend festgelegt wird.

8. Verfahren (100) nach Anspruch 7, wobei die Blockierungslinie (5) entlang der Längsachse (11) des Fahrzeugs (1) verlaufend festgelegt wird.

9. Verfahren (100) nach Anspruch 7, wobei die Blockierungslinie (5) mit einem vorgebbaren Abstand zur Längsachse (11) des Fahrzeugs (1) verlaufend festgelegt wird.

10. Verfahren (100) nach einem der Ansprüche 1 bis 7, wobei die Blockierungslinie (5) mittig zwischen Begrenzungen (12a, 12b) einer Fahrbahn (13), auf der sich die Ausgangsposition (A) befindet, verlaufend festgelegt wird.

11. Verfahren (100) nach einem der vorstehenden Ansprüche, wobei die Blockierungslinie (5) durch das Fahrzeug (1) freigegeben ist, wenn eine Kontur (14) des Fahrzeugs (1) die Blockierungslinie (5) nicht mehr berührt oder schneidet.

12. Parkassistenzsystem (200) zum Unterstützen eines Einparkvorgangs eines Fahrzeugs (1), umfassend Mittel der Informationsaufbereitung zur Ausführung eines Verfahrens (100) nach einem der vorstehenden Ansprüche.

13. Fahrzeug (1) umfassend ein Parkassistenzsystem (200) nach Anspruch 12

14. Fahrzeug (1) nach Anspruch 13, wobei das Fahrzeug ein autonomes Fahrzeug ist.

15. Computerprogramm, umfassend Befehle, die bei der Ausführung des Programms durch einen Computer diesen veranlassen, ein Verfahren (100) nach einem der Ansprüche 1 bis 11 auszuführen.

## Claims

1. Computer-implemented method (100) for assisting with a process of parking a vehicle (1) from a starting position (A) to a parked position (B) in a perpendicular parking space (2), the method (100) comprising the following steps:
- (S1): determining a trajectory (3) for a movement of the vehicle (1) into the parked position (B) using at least one parking move (22),
- (S2): checking whether the trajectory (3) provides one or more correction moves (4),
- (S3): defining a blocking line (5) running in the longitudinal direction through the vehicle (1) positioned in the starting position (A),
- if the trajectory (3) provides one or more correction moves (4), (S4): checking whether the blocking line (5) will be cleared by the vehicle (1) during a previous parking move (22) and a previous correction move (4) before carrying out the last parking move (22), and
- if the blocking line (5) will be cleared by the vehicle (1) during a previous parking move (22) and/or a previous correction move (4) before carrying out the last parking move (22), (S5): outputting a signal (6).

2. Method according to Claim 1, wherein the output signal (6) causes determination of a corrected trajectory (7) in such a way that the clearing of the blocking line (5) by the vehicle (1) during a previous parking move (22) and/or during a previous correction move (4) before carrying out the last parking move (22) is prevented (S6) .

3. Method according to Claim 2, wherein the corrected trajectory (7) is output to the driver or is taken into account during at least automatic lateral guidance of the vehicle.

4. Method (100) according to one of the preceding claims, wherein the output signal (6) causes interruption of the parking process and output of a warning message (8) (S7).

5. Method (100) according to Claim 4, wherein the parking process can only be continued if there is a confirmation signal (9) which confirms a free traffic area (10) in the region of the correction move (4) and/or parking move (22).

6. Method (100) according to one of the preceding claims, wherein the blocking line (5) is defined so as to run linearly and/or so as to run parallel to a boundary (12a, 12b) of the road (13).

7. Method (100) according to one of the preceding claims, wherein the blocking line (5) is defined so as to run parallel to a longitudinal axis (11) of the vehicle (1).

8. Method (100) according to Claim 7, wherein the blocking line (5) is defined so as to run along the longitudinal axis (11) of the vehicle (1).

9. Method (100) according to Claim 7, wherein the blocking line (5) is defined so as to run at a predefinable distance from the longitudinal axis (11) of the vehicle (1).

10. Method (100) according to one of Claims 1 to 7, wherein the blocking line (5) is defined so as to run centrally between boundaries (12a, 12b) of a road (13) on which the starting position (A) is located.

11. Method (100) according to one of the preceding claims, wherein the blocking line (5) is cleared by the vehicle (1) if a contour (14) of the vehicle (1) no longer touches or intersects the blocking line (5).

12. Parking assistance system (200) for assisting with a process of parking a vehicle (1), comprising information preparation means for carrying out a method (100) according to one of the preceding claims.

13. Vehicle (1) comprising a parking assistance system (200) according to Claim 12.

14. Vehicle (1) according to Claim 13, wherein the vehicle is an autonomous vehicle.

15. Computer program comprising instructions which, when the program is executed by a computer, cause the latter to carry out a method (100) according to one of Claims 1 to 11.

## Revendications

1. Procédé mis en œuvre par ordinateur (100) pour assister une manœuvre d'entrée en stationnement d'un véhicule (1) depuis une position initiale (A) vers une position de stationnement (B) dans une place de stationnement transversale (2), le procédé (100) comprenant les étapes suivantes :
- (S1): détermination d'une trajectoire (3) pour un déplacement du véhicule (1) dans la position de stationnement (B) avec au moins une course d'entrée en stationnement (22),
- (S2) : vérification si la trajectoire (3) prévoit une ou plusieurs courses de correction (4),
- (S3) : définition d'une ligne de blocage (5) qui suit un tracé dans le sens longitudinal à travers le véhicule (1) positionné dans la position initiale (A),
- dans le cas où la trajectoire (3) prévoit une ou plusieurs courses de correction (4), (S4) : vérification si la ligne de blocage (5) sera libérée avant l'exécution de la dernière course d'entrée en stationnement (22) par le véhicule (1) pendant une course d'entrée en stationnement (22) précédente et une course de correction (4) précédente, et
- dans le cas où la ligne de blocage (5) est libérée avant l'exécution de la dernière course d'entrée en stationnement (22) pendant une course d'entrée en stationnement (22) précédente et/ou une course de correction (4) précédente par le véhicule (1), (S5) : délivrance d'un signal (6).

2. Procédé selon la revendication 1, le signal (6) délivré provoquant une détermination d'une trajectoire corrigée (7) de telle sorte que la libération de la ligne de blocage (5) par le véhicule (1) avant l'exécution de la dernière course d'entrée en stationnement (22) est empêchée (S6) pendant une course d'entrée en stationnement (22) précédente et/ou pendant une course de correction (4) précédente.

3. Procédé selon la revendication 2, la trajectoire corrigée (7) étant délivrée au conducteur ou prise en compte dans le cadre d'un guidage transversal au moins automatique du véhicule.

4. Procédé (100) selon l'une des revendications précédentes, le signal (6) délivré provoquant (S7) une interruption de la course d'entrée en stationnement et une délivrance d'un message d'avertissement (8).

5. Procédé (100) selon la revendication 4, la manœuvre d'entrée en stationnement ne pouvant être poursuivie que si un signal de confirmation (9) est présent, lequel confirme un espace de circulation (10) libre dans la zone de la course de correction (4) et/ou de la course d'entrée en stationnement (22).

6. Procédé (100) selon l'une des revendications précédentes, la ligne de blocage (5) étant définie comme suivant un tracé rectiligne et/ou parallèle à une délimitation (12a, 12b) de la chaussée (13).

7. Procédé (100) selon l'une des revendications précédentes, la ligne de blocage (5) étant définie comme suivant un tracé parallèle à un axe longitudinal (11) du véhicule (1).

8. Procédé (100) selon la revendication 7, la ligne de blocage (5) étant définie comme suivant un tracé le long de l'axe longitudinal (11) du véhicule (1).

9. Procédé (100) selon la revendication 7, la ligne de blocage (5) étant définie comme suivant un tracé à une distance pouvant être prédéfinie de l'axe longitudinal (11) du véhicule (1).

10. Procédé (100) selon l'une des revendications 1 à 7, la ligne de blocage (5) étant définie comme suivant un tracé au centre entre les délimitations (12a, 12b) d'une chaussée (13) sur laquelle se trouve la position initiale (A).

11. Procédé (100) selon l'une des revendications précédentes, la ligne de blocage (5) étant libérée par le véhicule (1) lorsqu'un contour (14) du véhicule (1) ne touche plus ou ne croise plus la ligne de blocage (5).

12. Système d'aide au stationnement (200) destiné à assister une manœuvre d'entrée en stationnement d'un véhicule (1), comprenant des moyens de traitement d'informations destinés à mettre en œuvre un procédé (100) selon l'une des revendications précédentes.

13. Véhicule (1) comprenant un système d'aide au stationnement (200) selon la revendication 12.

14. Véhicule (1) selon la revendication 13, le véhicule étant un véhicule autonome.

15. Programme informatique comprenant des instructions qui, lors de l'exécution du programme par un ordinateur, amènent celui-ci à mettre en œuvre un procédé (100) selon l'une des revendications 1 à 11.
